# EUROPEAN PATENT APPLICATION

(11) **EP 4 775 304 A1**
(43) Date of publication of application: **15.07.2026**
(21) Application number: 25845717.5
(22) Date of filing: 12.08.2025
(51) Int. Cl.: B01J 23/58, B01J 23/46, B01J 21/10, B01J 21/02, B01J 37/08, C01C 1/04

(54) **RUTHENIUM LOSS INHIBITION-TYPE RUTHENIUM-BASED AMMONIA SYNTHESIS CATALYST AND PREPARATION METHOD THEREFOR**

(30) Priority: 12.11.2024 KR 20240159914
(71) Applicant: Korea Institute of Energy Research, Daejeon 34129 (KR)
(72) Inventor: LEE, Kyungho, Daejeon 34186 (KR); YOON, Hyung Chul, Daejeon 34071 (KR); BEUM, Hee-tae, Daejeon 34023 (KR); SHIM, Joon-mok, Daejeon 34071 (KR); KIM, Sun Hyung, Daejeon 34191 (KR); KIM, Jae Hyung, Daejeon 34180 (KR); KIM, Taek-Seung, Incheon 21507 (KR); WOO, Ra Yoon, Daejeon 34165 (KR)
(74) Representative: V.O.
(86) International application number: PCT/KR2025/012145
(87) International publication number: WO 2026/106036

(57) **Abstract**

Provided is a method for preparing a ruthenium catalyst composite for ammonia synthesis, including the steps of: (c) carrying out drying and primary heat treatment of a magnesium/aluminum precursor to prepare a calcined magnesium/ aluminum material; (d) impregnating the calcined magnesium/aluminum material with an aqueous barium precursor solution, and carrying out drying and secondary heat treatment to prepare a calcined magnesium/aluminum/barium material; and (e) impregnating the calcined magnesium/aluminum/barium material with a ruthenium precursor solution, and carrying out drying and tertiary heat treatment to prepare a ruthenium catalyst composite. A ruthenium catalyst composite for ammonia synthesis obtained by the method is also provided. The method can prevent ruthenium (Ru) loss caused by ruthenium (Ru) volatilization in preparing the catalyst and in synthesizing ammonia. The ruthenium catalyst composite for ammonia synthesis includes a trace amount of aluminum, and thus can solve the problem of degradation of catalytic activity caused by high-content aluminum oxide.

## Description

### BACKGROUND

### 1. Field

The present disclosure relates to a ruthenium-based catalyst for ammonia synthesis and a method for preparing the same. Specifically, the present disclosure relates to a ruthenium-based catalyst for ammonia synthesis capable of suppressing ruthenium loss caused by ruthenium volatilization and a method for preparing the same.

### 2. Description of the Related Art

This invention was developed under the project (GTL24051-000) supported by the Ministry of Science and ICT of the Republic of Korea.

Noble metal elements are those used essentially as catalysts for various industrially important reactions, including petroleum refining, medicine manufacture, environmental purification and renewable energy conversion. In order to improve the efficacy of noble metals in non-uniform catalysts, noble metal particles may be formed into a desired size, and electronic structures may be adjusted with auxiliary components known as supports, promoters, or the like. Such auxiliary components improve activity, product selectivity and durability, and aim not to cause side effects. However, it is difficult to achieve the-above mentioned purpose due to the complex interaction between the catalyst components and the reaction intermediates.

Ruthenium (Ru) can have various oxidation states and is an important catalyst component capable of adsorbing/desorbing various molecules. Ruthenium (Ru) has been spotlighted for the manufacture of electronic devices, such as hard disks, and as a catalyst for polymer electrolyte membrane (PEM) water electrolysis, and in recent years, has been gradually increasingly in demand as a catalyst for a low-temperature and low-pressure ammonia (NH₃) synthesis process, which is essential for decarbonization and supply of renewable energy. It is known that a ruthenium (Ru)-based catalyst provides a much higher ammonia synthesis rate as compared to commercially available iron (Fe)-based catalysts, which are mostly applied to the current Harbor-Bosch process, and thus has been given a lot of attention as a next-generation catalyst for ammonia synthesis reaction that converts conventional process operating conditions to milder conditions. However, ruthenium (Ru) is the sixth rarest element in the crust and is limited in wide-ranging application. To solve this problem, it is necessary to develop a high-performance catalyst having a higher utilization rate of ruthenium (Ru).

A non-uniform ruthenium (Ru) catalyst is generally prepared by impregnating a support with an ionic ruthenium precursor and carrying out heat treatment, such as calcination and reduction. An intermediate, such as ruthenium oxide (RuOₓ), may be formed during such a catalyst preparation process. Ruthenium oxide is known as a highly volatile material. In other words, under high-temperature conditions such as heat treatment, a problem may occur in that ruthenium oxide may be lost from the catalyst surface due to volatilization, thereby limiting catalytic activity. When a catalyst containing such highly volatile ruthenium (Ru) is used for preparing ammonia, there may also be additional problems in that ruthenium (Ru) is deposited inside the reactor or causes contamination of the product, ammonia.

### [References]

### [Non-Patent Documents]

Journal of Catalysis Volume 434, June 2024, 115530

### SUMMARY

The present disclosure is directed to providing a method for preparing a ruthenium (Ru)-based catalyst for ammonia synthesis capable of suppressing ruthenium (Ru) loss caused by ruthenium (Ru) volatilization in preparing a ruthenium (Ru)-based catalyst for ammonia synthesis and in synthesizing ammonia.

The present disclosure is also directed to providing a ruthenium (Ru)-based catalyst for ammonia synthesis which allows high-efficiency ammonia synthesis and prevents contamination of ammonia caused by ruthenium volatilization by suppressing ruthenium (Ru) loss caused by ruthenium (Ru) volatilization.

In one aspect, there is provided a method for preparing a ruthenium catalyst composite for ammonia synthesis, including the steps of:
(c) carrying out drying and primary heat treatment of a magnesium/aluminum precursor to prepare a calcined magnesium/aluminum material;
(d) impregnating the calcined magnesium/aluminum material with an aqueous barium precursor solution, and carrying out drying and secondary heat treatment to prepare a calcined magnesium/aluminum/barium material; and
(e) impregnating the calcined magnesium/aluminum/barium material with a ruthenium precursor solution, and carrying out drying and tertiary heat treatment to prepare a ruthenium catalyst composite.

According to an exemplary embodiment of the present disclosure, before step (c), the following steps (a) and (b) may be carried out:
(a) mixing a magnesium precursor and aluminum precursor with distilled water to prepare a mixed aqueous solution; and
(b) performing co-precipitation while adding an aqueous solution for precipitation to the mixed aqueous solution to obtain a magnesium/aluminum precursor as a precipitate.

According to another exemplary embodiment of the present disclosure, before step (c), the following steps (a') and (b') may be carried out:
(a') mixing an aluminum precursor with distilled water to prepare an aqueous aluminum precursor solution; and
(b') impregnating magnesium oxide (MgO) with the aqueous aluminum precursor solution to obtain a magnesium/aluminum precursor.

In step (a), the magnesium precursor may be any one selected from magnesium nitrate (Mg(NO₃)₂), magnesium bicarbonate (Mg(HCO₃)₂), magnesium chlorate (Mg(ClO₃)₂), magnesium chloride (MgCl₂), magnesium bromide (MgBr₂), magnesium iodide (MgI₂) and magnesium sulfate (MgSO₄), or hydrate thereof.

In steps (a) and (a'), the aluminum precursor may be any one selected from aluminum nitrate (Al(NO₃)₃), aluminum bicarbonate (Al(HCO₃)₃), aluminum chlorate (Al(ClO₃)₃), aluminum chloride (AlCl₃), aluminum bromide (AlBr₃), aluminum iodide (AlI₃) and aluminum sulfate (Al₂(SO₄)₃), or hydrate thereof.

In step (a), the mixed aqueous solution of magnesium and aluminum may have a molar ratio of Al/(Mg+Al) of 0.01 to 0.10.

The mixed aqueous solution of magnesium and aluminum may have a temperature of 20°C to 100°C.

In step (b), the aqueous solution for precipitation may be an aqueous solution of any one selected from ammonium carbonate ((NH₄)₂CO₃), ammonium phosphate ((NH₄)₃PO₄), ammonium chromate ((NH₄)₂CrO₄), ammonium sulfide ((NH₄)₂S) and ammonium hydroxide (NH₄OH).

In step (c), a step of washing the precipitate with distilled water until pH becomes 7 may be further carried out.

The drying may be carried out at 60°C to 130°C.

The primary heat treatment may be carried out at 400°C to 800°C.

The primary heat treatment may be carried out under air or inert gas atmosphere.

In step (d), the barium precursor may be any one selected from barium nitrate (Ba(NO₃)₂), barium bicarbonate (Ba(HCO₃)₂), barium chlorate (Ba(ClO₃)₂), barium chloride (BaCl₂), barium bromide (BaBr₂), barium iodide (BaI₂) and barium sulfate (BaSO₄), or hydrate thereof.

The barium precursor may be impregnated to a molar ratio of Ba/(Mg+Al) of 0.02 to 0.10.

The drying may be carried out at 60°C to 130°C.

The secondary heat treatment may be carried out at 400°C to 800°C.

The secondary heat treatment may be carried out under nitrogen atmosphere, hydrogen atmosphere or inert gas atmosphere.

In step (e), the ruthenium precursor may be any one selected from triruthenium dodecacarbonyl (Ru₃(CO)₁₂), ruthenium chloride (RuCl₃·xH₂O), ruthenium carbonate (C₃O₉Ru₂) and ruthenium nitrate (Ru(NO)(NO₃)₃).

The ruthenium precursor solution may be one dissolved in any one organic solvent selected from tetrahydrofuran, diisopropyl ether, methyl t-butyl ether (MTBE), ethyl t-butyl ether, methyl t-pentyl ether (TAME), ethyl t-pentyl ether, 1,4-dioxane, ethylene glycol dimethyl ether or diethyl ether, diethylene glycol dimethyl ether and dimethyl ether.

The ruthenium precursor solution may be impregnated to a molar ratio of Ba/Ru of 1.5 to 4.0.

The drying may be carried out at 60°C to 130°C.

The tertiary heat treatment may be carried out at 300°C to 700°C.

The tertiary heat treatment may be carried out under hydrogen gas atmosphere.

In another aspect, there is provided a ruthenium catalyst composite for ammonia synthesis, obtained by the above-described method.

The ruthenium catalyst composite for ammonia synthesis may have a content of magnesium (Mg) of 40 wt% to 50 wt%.

The ruthenium catalyst composite for ammonia synthesis may have a content of aluminum (Al) of 0.5 wt% to 4.0 wt%.

The ruthenium catalyst composite for ammonia synthesis may have a content of barium (Ba) of 8 wt% to 25 wt%.

The ruthenium catalyst composite for ammonia synthesis may have an Al*_{O}*/Al*_{T}* value of 6 to 8 as determined by ²⁷Al magic angle spinning-nuclear magnetic resonance (MAS-NMR) analysis.

The ruthenium catalyst composite for ammonia synthesis may have a structure of solid solution in which aluminum (Al) is dispersed in an atomic state.

The ruthenium catalyst composite for ammonia synthesis may include ruthenium having an average diameter of 1.5 nm to 2 nm.

In still another aspect, there is provided a method for ammonia synthesis using the ruthenium catalyst composite for ammonia synthesis obtained by the above-described method.

The method for preparing a ruthenium (Ru)-based catalyst for ammonia synthesis according to the present disclosure can prevent ruthenium (Ru) loss caused by ruthenium (Ru) volatilization in preparing the catalyst and in synthesizing ammonia. In addition, unlike conventional catalysts, the ruthenium (Ru)-based catalyst for ammonia synthesis can realize a solid solution structure in which a trace amount of aluminum (Al) is uniformly dispersed in MgO and BaO in an atomic state, include BaO crystals having higher dispersibility and ruthenium (Ru) particles having much higher dispersibility as smaller particles, and can form a spatially close structure between ruthenium (Ru) as an active center and barium (Ba) as a co-catalyst to maximize the interface between the two components. Therefore, the ruthenium (Ru)-based catalyst for ammonia synthesis obtained according to the method of the present disclosure allows high-efficiency ammonia synthesis, can have high long-term stability, can prevent an additional problem of contamination of ammonia product caused by ruthenium volatilization, and includes a trace amount of aluminum, thereby solving a problem of degradation of catalytic activity caused by high-content aluminum oxide.

### BRIEF DESCRIPTION OF THE DRAWINGS

FIG. 1 is a flowchart sequentially illustrating a process of preparing a ruthenium-based catalyst composite according to an embodiment of the present disclosure.
FIG. 2 is a flowchart sequentially illustrating a process of preparing a ruthenium-based catalyst composite according to another exemplary embodiment of the present disclosure.
FIG. 3 shows results of ruthenium (Ru) volatility analysis (temperature programmed desorption-mass spectrometry (TPD-MS)) when final heat treatment is carried out according to Test Example 2.
FIG. 4 shows results of ²⁷Al magic angle spinning-nuclear magnetic resonance (MAS-NMR) analysis according to Test Example 3.
FIG. 5 shows results of X-ray diffractometry (XRD) of the ruthenium catalyst composite powder according to Test Example 4.
FIG. 6 is an electron microscopic image according to Test Example 5.
FIG. 7 shows results of catalytic activity comparison between the ruthenium catalyst composites of Examples and the ruthenium catalyst composites of Comparative Examples according to Test Example 6.
FIG. 8 shows long-term test results of ammonia synthesis using the ruthenium catalyst composite support of Example 1 according to Test Example 6.

### DETAILED DESCRIPTION

Hereinafter, various aspects and various exemplary embodiment of the present disclosure will be explained more specifically.

Hereinafter, exemplary embodiments of the present disclosure will be explained in detail with reference to the accompanying drawings so that those skilled in the art may easily implement the present disclosure.

However, the following description is not intended to limit the present disclosure to a specific embodiment, and if it is determined that detailed description of the related known technology may obscure the gist of the present disclosure, the detailed description is omitted.

The terms used herein are provided only to describe specific embodiments and are not intended to limit the present disclosure. Singular expressions include plural expressions, unless the context clearly indicates otherwise. In the present specification, terms such as "including" or "having" are intended to specify that there is a feature, number, step, operation, constitutional element, part or a combination thereof described in the specification, and should not be understood as excluding the existence or the possibility of addition of one or more other features, numbers, steps, operations, constitutional elements, parts or combinations thereof.

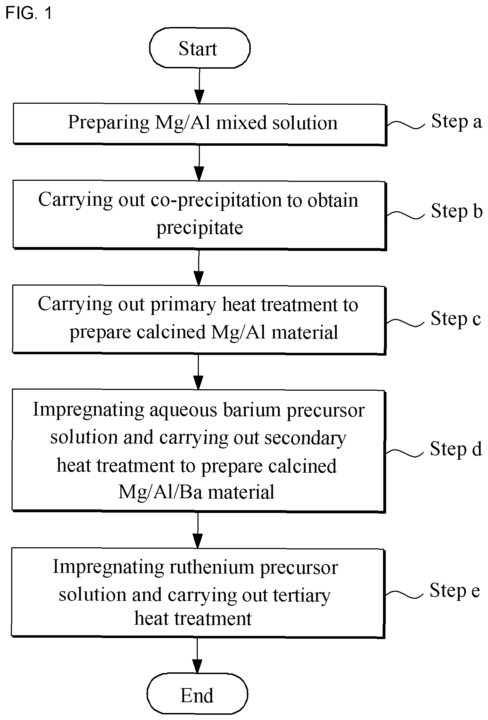

FIG. 1 is a flowchart sequentially illustrating a process of preparing a ruthenium-based catalyst composite according to an embodiment of the present disclosure. Hereinafter, the method for preparing a ruthenium (Ru) catalyst composite for ammonia synthesis according to an exemplary embodiment of the present disclosure will be explained with reference to FIG. 1.

First, a magnesium precursor and aluminum precursor are mixed with distilled water to prepare a mixed aqueous solution (step a).

As the magnesium precursor, magnesium nitrate (Mg(NO₃)₂), magnesium bicarbonate (Mg(HCO₃)₂), magnesium chlorate (Mg(ClO₃)₂), magnesium chloride (MgCl₂), magnesium bromide (MgBr₂), magnesium iodide (MgI₂) or magnesium sulfate (MgSO₄), or hydrate thereof may be used preferably, and magnesium nitrate (Mg(NO₃)₂) or hydrate thereof may be used more preferably. The magnesium precursor is characterized in that it is soluble in distilled water.

As the aluminum precursor, aluminum nitrate (Al(NO₃)₃), aluminum bicarbonate (Al(HCO₃)₃), aluminum chlorate (Al(ClO₃)₃), aluminum chloride (AlCl₃), aluminum bromide (AlBr₃), aluminum iodide (AlI₃) or aluminum sulfate (Al₂(SO₄)₃), or hydrate thereof may be used preferably, and aluminum nitrate (Al(NO₃)₃) or hydrate thereof may be used more preferably. The aluminum precursor is characterized in that it is soluble in distilled water.

The mixed aqueous solution including the magnesium precursor and aluminum precursor may preferably have a molar ratio of Al/(Mg+Al) of 0.01 to 0.10, more preferably 0.012 to 0.08. The ruthenium (Ru) catalyst composite for ammonia synthesis according to the present disclosure is characterized in that it has a significantly lower content of aluminum (Al) as compared to the existing ruthenium-based catalysts. When the molar ratio of Al/(Mg+Al) is beyond the upper limit or lower limit of the above-defined range, catalyst stability may be degraded significantly. Particularly, when the molar ratio of Al/(Mg+Al) ranges from 0.03 to 0.05, catalyst activity can be increased significantly.

Barium oxide (BaO) described hereinafter requires maintenance of strong alkalinity and needs an alkaline support, and magnesium oxide (MgO) is a constitutional element of a catalyst support suitable for an alkaline support. On the contrary, an acidic support such as aluminum oxide (Al₂O₃) may inhibit the activity of a ruthenium (Ru) catalyst by titrating the strong alkalinity of barium oxide (BaO). For example, according to the research of the related art, it is known that an Ru-Ba catalyst using a support with a ratio of MgO:Al₂O₃ = 70:30 shows significantly lower catalytic activity as compared to an Ru-Ba catalyst using pure magnesium oxide (MgO) as a support.

According to the present disclosure, aluminum does not exist as oxide (Al₂O₃) in a finished catalyst composite by using aluminum (Al) in a trace amount but can form a solid solution structure in which it is dispersed in an atomic state. Therefore, it is possible to prevent degradation of catalytic activity, which, otherwise, occurs due to aluminum oxide contained in a catalyst composite according to the related art.

The mixed aqueous solution of magnesium and aluminum may preferably have a temperature of 20°C to 100°C, more preferably 22°C to 30°C, and even more preferably 23°C to 27°C.

Next, co-precipitation is performed while adding an aqueous solution for precipitation to the mixed aqueous solution to obtain a magnesium/aluminum precursor as a precipitate (step b).

The aqueous solution for precipitation may be preferably an aqueous solution of ammonium carbonate ((NH₄)₂CO₃), ammonium phosphate ((NH₄)₃PO₄), ammonium chromate ((NH₄)₂CrO₄), ammonium sulfide ((NH₄)₂S), ammonium hydroxide (NH₄OH), or the like, more preferably ammonium carbonate ((NH₄)₂CO₃). The anion of the aqueous solution for precipitation, i.e. carbonate ion, phosphate ion, chromate ion, sulfide ion or hydroxide ion is bound with magnesium ion and aluminum ion while being added to the mixed aqueous solution of the magnesium precursor and aluminum precursor, thereby forming a precipitate.

Then, drying and primary heat treatment of the magnesium/aluminum precursor as a precipitate are carried out to prepare a calcined magnesium/aluminum material (step c).

The precipitate is preferably washed with distilled water until pH becomes 7, before drying.

The drying may be carried out preferably at 60°C to 130°C, more preferably 80°C to 125°C, and even more preferably 100°C to 120°C.

The primary heat treatment may be carried out preferably at 400°C to 800°C, more preferably 450°C to 700°C, and even more preferably 500°C to 600°C.

In addition, the primary heat treatment may be carried out preferably under air or inert gas atmosphere. It is possible to form magnesium oxide and to form a solid solution in which aluminum is dispersed in an atomic state by carrying out the calcination through the primary heat treatment at the above-defined temperature under air or inert gas atmosphere. When the heat treatment is carried out at a temperature of less than 400°C, oxidation and calcination may not be performed sufficiently. When the heat treatment is carried out at a temperature higher than 800°C, undesired processing costs may be generated.

After that, the calcined magnesium/aluminum material is impregnated with an aqueous barium precursor solution, and drying and secondary heat treatment is carried out to prepare a calcined magnesium/aluminum/barium material (step d).

The barium precursor may be any one selected from barium nitrate (Ba(NO₃)₂), barium bicarbonate (Ba(HCO₃)₂), barium chlorate (Ba(ClO₃)₂), barium chloride (BaCl₂), barium bromide (BaBr₂), barium iodide (BaI₂) and barium sulfate (BaSO₄), or hydrate thereof.

The barium precursor may be impregnated preferably to a molar ratio of Ba/(Mg+Al) of 0.02 to 0.10, more preferably 0.03 to 0.09 When the molar ratio of Ba/(Mg+Al) is less than 0.02, the activity of a finished catalyst composite may be degraded significantly. When the molar ratio of Ba/(Mg+Al) is larger than 0.10, there is little increase in catalytic activity resulting from an increase in barium (Ba), and the contents of the other components are reduced to cause degradation of catalytic activity rather.

The drying may be carried out preferably at 60°C to 130°C, more preferably 70°C to 90°C, and even more preferably 75°C to 85°C.

The secondary heat treatment may be carried out preferably at 400°C to 800°C, more preferably 450°C to 700°C, and even more preferably 500°C to 600°C.

The secondary heat treatment may be carried out under nitrogen atmosphere, hydrogen atmosphere or inert gas atmosphere. After the secondary heat treatment, barium oxide (BaO) may be formed and added to the catalyst composite, thereby forming a calcined magnesium/aluminum/barium material firmly.

Finally, the calcined magnesium/aluminum/barium material is impregnated with a ruthenium precursor solution, and drying and tertiary heat treatment are carried out to prepare a ruthenium catalyst composite (step e).

The ruthenium precursor may be preferably any one selected from triruthenium dodecacarbonyl (Ru₃(CO)₁₂), ruthenium chloride (RuCl₃·xH₂O), ruthenium carbonate (C₃O₉Ru₂) and ruthenium nitrate (Ru(NO)(NO₃)₃), more preferably triruthenium dodecacarbonyl (Ru₃(CO)₁₂) or ruthenium chloride (RuCl₃·xH₂O), and even more preferably triruthenium dodecacarbonyl (Ru₃(CO)₁₂). When using triruthenium dodecacarbonyl (Ru₃(CO)₁₂), the activity of a finished catalyst can be improved significantly.

The ruthenium precursor solution may be one dissolved in any one organic solvent selected from tetrahydrofuran, diisopropyl ether, methyl t-butyl ether (MTBE), ethyl t-butyl ether, methyl t-pentyl ether (TAME), ethyl t-pentyl ether, 1,4-dioxane, ethylene glycol dimethyl ether or diethyl ether, diethylene glycol dimethyl ether and dimethyl ether.

The ruthenium precursor solution may be impregnated preferably to a molar ratio of Ba/Ru of 1.5 to 4.0, more preferably 1.7 to 3.8. Within the above-defined range of molar ratio, catalytic activity can be maximized. Beyond the above-defined range, catalytic activity may be degraded significantly.

The drying may be carried out preferably at 60°C to 130°C, more preferably 70°C to 90°C, and even more preferably 75°C to 85°C.

The tertiary heat treatment may be carried out preferably at 300°C to 700°C, more preferably 400°C to 600°C, and even more preferably 450°C to 550°C. The tertiary heat treatment may be carried out under hydrogen gas atmosphere. According to this, ruthenium (Ru) particles can be dispersed uniformly in the catalyst composite, and ruthenium (Ru), barium (Ba) and aluminum (Al) can be distributed while being in spatially close contact with one another.

Even if the tertiary heat treatment is carried out under the same conditions, when preparing a catalyst composite under a condition free from aluminum, deposition in barium oxide (BaO) layer, which is a co-catalyst, or a failure in contact with barium (Ba) occurs to cause a problem of a decrease in "Ru-BaO interface" as an active spot, resulting in degradation of catalytic activity. The closer ruthenium (Ru) and barium oxide (BaO) form an interface, the higher catalytic activity can be realized. Barium oxide (BaO) is an electronic promotor, can accelerate activation of nitrogen gas (N₂) of ruthenium (Ru) as an activity center and can alleviate hydrogen (H) poisoning.

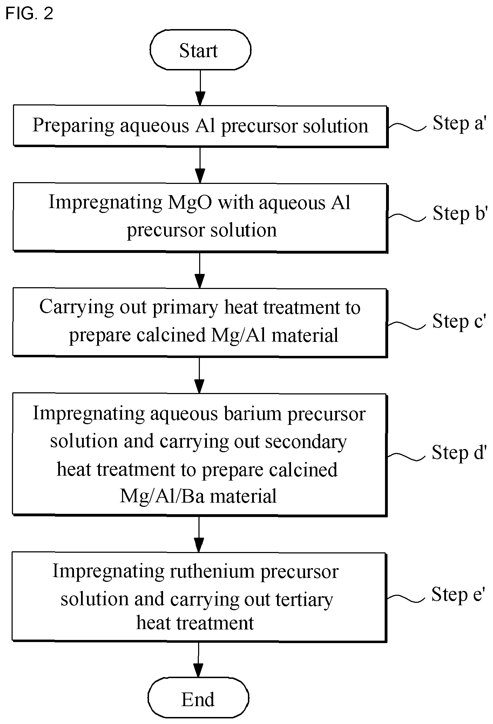

FIG. 2 is a flowchart sequentially illustrating a process of preparing a ruthenium-based catalyst composite according to another exemplary embodiment of the present disclosure. Hereinafter, the method for preparing a ruthenium (Ru) catalyst composite for ammonia synthesis according to another exemplary embodiment of the present disclosure will be explained with reference to FIG. 2.

First, an aluminum precursor is mixed with distilled water to prepare an aqueous aluminum precursor solution (step a').

The aluminum precursor and the temperature of the aqueous solution are the same as described above, and reference will be made to the above contents about detailed description thereof.

Next, magnesium oxide (MgO) is impregnated with the aqueous aluminum precursor solution to obtain a magnesium/aluminum precursor (step b').

After that, (step c), (step d) and (step e) in the above-described exemplary embodiment may be carried out in sequence to prepare a catalyst composite. Therefore, reference will be made to the above contents about detailed description thereof.

However, in (step e), the ruthenium precursor may be preferably any one selected from triruthenium dodecacarbonyl (Ru₃(CO)₁₂), ruthenium chloride (RuCl₃·xH₂O), ruthenium carbonate (C₃O₉Ru₂) and ruthenium nitrate (Ru(NO)(NO₃)₃), more preferably triruthenium dodecacarbonyl (Ru₃(CO)₁₂) or ruthenium chloride (RuCl₃·xH₂O), and even more preferably ruthenium chloride (RuCl₃·xH₂O). When using ruthenium chloride (RuCl₃·xH₂O), the activity of a finished catalyst may be improved significantly as compared to a catalyst using triruthenium dodecacarbonyl (Ru₃(CO)₁₂).

Another exemplary embodiment of the present disclosure provides a ruthenium catalyst composite for ammonia synthesis, obtained by the above-described method.

The ruthenium catalyst composite for ammonia synthesis may have a content of magnesium (Mg) of 40 wt% to 50 wt%. Magnesium oxide (Mg) containing magnesium can function as an alkaline support in order to maintain strong alkalinity of barium oxide (BaO), which is a co-catalyst.

The ruthenium catalyst composite for ammonia synthesis may preferably have a content of aluminum (Al) of 0.5 wt% to 4.0 wt%, more preferably 0.6 wt% to 3.8 wt%, and even more preferably 0.7 wt% to 3.7 wt%. Since aluminum (Al) content is such a trace amount, oxide can be formed hardly, and it is possible to prevent degradation of catalytic activity occurring in a catalyst support having a high aluminum oxide (Al₂O₃) content. In addition, it is possible to form a solid structure in which aluminum (Al) infiltrates to the crystal surfaces of barium oxide (BaO) and is dispersed in an atomic state. As a result, it is possible to increase "Ru-BaO interface", to improve catalytic activity and to suppress ruthenium (Ru) loss caused by ruthenium (Ru) volatilization.

The ruthenium catalyst composite for ammonia synthesis may preferably have a content of barium (Ba) of 8 wt% to 25 wt%, more preferably 10 wt% to 22 wt%. When barium (Ba) content is less than 8 wt%, the activity of a finished catalyst composite may be degraded significantly. When barium (Ba) content is larger than 25 wt%, there is an insignificant effect of increasing catalytic activity resulting from an increase in barium (Ba), while the contents of the other components are reduced to cause degradation of catalytic activity.

The ruthenium catalyst composite for ammonia synthesis may preferably have an Al_{O}/Al_{T} value of 6 to 8, more preferably 6.5 to 7.7, and even more preferably 7 to 7.5, as determined by ²⁷Al magic angle spinning-nuclear magnetic resonance (MAS-NMR) analysis. Herein, Al*_{T}* represents tetrahedral Al, and Al_{O} represents hexahedral Al. In other words, the ruthenium catalyst composite according to the present disclosure is characterized in that distribution of hexahedral aluminum (Al) species is significantly high, and aluminum (Al) is dispersed in a hexahedral structure of magnesium oxide (MgO) and barium oxide (BaO).

As mentioned above, the ruthenium catalyst composite for ammonia synthesis is characterized by a solid solution structure in which aluminum (Al) is dispersed in an atomic state.

The ruthenium catalyst composite for ammonia synthesis may include ruthenium having an average diameter of 1.5 nm to 2 nm.

Still another exemplary embodiment of the present disclosure provides a method for ammonia synthesis using the ruthenium catalyst composite for ammonia synthesis obtained by the above-described method.

Any known methods may be applied to ammonia synthesis.

Hereinafter, the present disclosure will be explained in more detail with reference to Examples.

### [Examples]

### Example 1: Preparation of catalyst containing Ru, Ba, Mg and Al

First, 18.610 g of Mg(NO₃)₂·6H₂O (Sigma Aldrich) and 0.908 g of Al(NO₃)₃·9H₂O (Sigma Aldrich) (molar ratio of Mg/Al = 30) were added to 37.5 mL of distilled water and agitated at 25°C to prepare an aqueous solution containing Mg mixed with Al. In addition, 28.827 g of (NH₄)₂CO₃ (Sigma Aldrich) was added to 122 mL of distilled water and agitated at 25°C to prepare an aqueous solution for precipitation. Then, co-precipitation was performed while the aqueous solution for precipitation was added to the aqueous solution containing Mg mixed with Al at a rate of 1 mL/min by using a burette.

The prepared mixed suspension was agitated at 60°C for 6 hours, and the precipitate was obtained after the agitation by using a reduced pressure filtering device and washed with distilled water until pH became 7. The resultant product was dried in an oven at 110°C for 12 hours and subjected to primary heat treatment under the flow of air at 550°C for 1.5 hours to carry out calcination.

Then, 0.588 g of Ba(NO₃)₂ (Sigma Aldrich) was dissolved in 40 mL of distilled water, and 1.5 g of the product obtained as described above was impregnated therewith. Herein, the solvent was allowed to evaporate at 50°C by using a rotary evaporator. The product free from the solvent was dried in an oven at 80°C to remove water, and secondary heat treatment was carried out under the flow of nitrogen (N₂) at 550°C for 1.5 hours.

After that, 0.166 g of Ru₃(CO)₁₂ (Sigma Aldrich) was dissolved in 50 mL of tetrahydrofuran, and 1.5 g of the product containing Ba, Mg and Al was impregnated therewith. The solvent was allowed to evaporate at 40°C by using a rotary evaporator. The product free from the solvent was dried in an oven at 80°C for 30 minutes and recovered, and then tertiary heat treatment was carried out under the flow of hydrogen (H₂) at 550°C for 1.5 hours to perform reduction.

### Example 2: Ruthenium catalyst composite having lower aluminum content as compared to Example 1

A catalyst was prepared in the same manner as Example 1, except that 19.019 g of Mg(NO₃)₂·6H₂O and 0.309 g of Al(NO₃)₃·9H₂O (molar ratio of Mg/Al = 90) were added to 37.5 mL of distilled water and agitated at 25°C to prepare an aqueous solution containing Mg mixed with Al.

### Example 3: Ruthenium catalyst composite having higher aluminum content as compared to Example 1

A catalyst was prepared in the same manner as Example 1, except that 18.029 g of Mg(NO₃)₂·6H₂O and 1.758 g of Al(NO₃)₃·9H₂O (molar ratio of Mg/Al = 15) were added to 37.5 mL of distilled water and agitated at 25°C to prepare an aqueous solution containing Mg mixed with Al.

### Example 4: Ruthenium catalyst composite having lower barium content as compared to Example 1

A catalyst was prepared in the same manner as Example 1, except that 0.392 g of Ba(NO₃)₂ was used in the Ba impregnation step.

### Example 5: Ruthenium catalyst composite having higher barium content as compared to Example 1

A catalyst was prepared in the same manner as Example 1, except that 0.784 g of Ba(NO₃)₂ was used in the Ba impregnation step.

### Example 6: Ruthenium catalyst composite using different aluminum introduction method from Example 1

First, a solution containing 0.908 g of Al(NO₃)₃·9H₂O dissolved in 15 mL of distilled water was prepared, and 2.926 g of commercially available MgO (Sigma Aldrich) was impregnated with the solution. Then, a catalyst was prepared by carrying out the subsequent processes in the same manner as Example 1, except that the obtained MgO impregnated with Al was dried in an oven at 110°C for 12 hours and calcined through heat treatment under the flow of air at 550°C for 1.5 hours to obtained a calcined material containing magnesium and aluminum.

### Example 7: Ruthenium catalyst composite having lower aluminum content as compared to Example 6

A catalyst was prepared in the same manner as Example 6, except that a solution containing 0.309 g of Al(NO₃)₃·9H₂O dissolved in 15 mL of distilled water was prepared, and 2.990 g of commercially available MgO was impregnated with the solution.

### Example 8: Ruthenium catalyst composite using different Ru precursor from Example 1

A catalyst was prepared in the same manner as Example 1, except that 0.162 g of RuCl₃·xH₂O (~40 wt% Ru, Alfa Aesar) was used instead of 0.166 g of Ru₃(CO)₁₂ in the Ru impregnation step.

### Comparative Example 1: Ruthenium catalyst composite free from Al

A catalyst was prepared in the same manner as Example 1, except that no Al precursor was used in the initial solution, and only 19.231 g of Mg(NO₃)₂·6H₂O was added to 37.5 mL of distilled water and agitated at 25°C to prepare an aqueous solution containing Mg.

### Comparative Example 2: Ruthenium catalyst composite free from Al and having lower Ba content

A catalyst was prepared in the same manner as Example 4, except that no Al precursor was used in the initial solution, and only 19.231 g of Mg(NO₃)₂·6H₂O was added to 37.5 mL of distilled water and agitated at 25°C to prepare an aqueous solution containing Mg.

### Comparative Example 3: Ruthenium catalyst composite free from Al and having higher Ba content

A catalyst was prepared in the same manner as Example 5, except that no Al precursor was used in the initial solution, and only 19.231 g of Mg(NO₃)₂·6H₂O was added to 37.5 mL of distilled water and agitated at 25°C to prepare an aqueous solution containing Mg.

### Comparative Example 4: Ruthenium catalyst composite free from Mg

A catalyst was prepared in the same manner as Example 1, except that no Mg precursor was used in the initial solution, and only 28.135 g of Al(NO₃)₃·9H₂O was added to 37.5 mL of distilled water and agitated at 25°C to prepare an aqueous solution containing Al.

### [Test Examples]

### Test Example 1: Elemental analysis (ICP)

In Examples 1 to 8 according to the present disclosure and Comparative Examples 1 to 3, Ru content was analyzed through the inductively coupled plasma-optical emission spectroscopy (ICP-OES) before and after 'reduction' step performed after the Ru precursor impregnation. The results of the Ru content in each catalyst determined thereby are shown in the following Table 1.

**[Table 1]**

| Catalyst | Ru content (wt%), before reduction | Ru content (wt%), after reduction | Ru content variation % |
|---|---|---|---|
| Ex. 1 | 4.71 | 4.33 | -8.07 |
| Ex. 2 | 4.85 | 4.66 | -3.92 |
| Ex. 3 | 4.56 | 4.71 | +3.29 |
| Ex. 4 | 4.92 | 4.58 | -6.91 |
| Ex. 5 | 4.35 | 4.29 | -1.38 |
| Ex. 6 | 4.42 | 4.55 | +2.94 |
| Ex. 7 | 4.68 | 4.42 | -5.56 |
| Ex. 8 | 4.14 | 3.89 | -6.04 |
| Comp. Ex. 1 | 4.32 | 1.01 | -76.62 |
| Comp. Ex. 2 | 4.50 | 2.01 | -55.33 |
| Comp. Ex. 3 | 4.45 | 0.71 | -84.04 |
| Comp. Ex. 4 | 4.89 | 4.78 | -2.25 |

As can be seen from the above results, the ruthenium catalyst composites containing aluminum (Al) according to Examples 1 to 8 and Comparative Example 4 show a variation of ruthenium (Ru) content of -8.07% to +3.29%, and thus there is little difference before and after the reductive heat treatment. On the contrary, the catalyst composites free from aluminum (Al) according to Comparative Examples 1 to 3 show a significant decrease in ruthenium (Ru) content of -84.04% to -55.33% after the reduction as compared to before the reduction. That is, it can be seen that ruthenium (Ru) loss during the reduction treatment is suppressed in the catalyst composites containing aluminum (Al).

Meanwhile, the weight ratio of magnesium (Mg), aluminum (Al) and barium (Ba) of each of the ruthenium catalyst composites according to Examples 1 to 8 and Comparative Examples 1 to 4 was analyzed. The results are shown in the following Table 2. In addition, the molar ratios among the constitutional elements of magnesium (Mg), aluminum (Al), barium (Ba) and ruthenium (Ru) were analyzed. The results are shown in the following Table 3.

**[Table 2]**

| Catalyst | Mg (wt%) | Al (wt%) | Ba (wt%) |
|---|---|---|---|
| Ex. 1 | 45.86 | 2.09 | 17.57 |
| Ex. 2 | 46.54 | 0.88 | 18.22 |
| Ex. 3 | 43.99 | 3.66 | 16.25 |
| Ex. 4 | 49.41 | 2.33 | 10.59 |
| Ex. 5 | 42.22 | 1.77 | 21.81 |
| Ex. 6 | 45.95 | 2.01 | 16.84 |
| Ex. 7 | 46.69 | 0.72 | 17.22 |
| Ex. 8 | 44.37 | 1.98 | 17.27 |
| Comp. Ex. 1 | 48.67 | 0 | 16.37 |
| Comp. Ex. 2 | 50.94 | 0 | 12.09 |
| Comp. Ex. 3 | 45.95 | 0 | 20.18 |
| Comp. Ex. 4 | 0 | 41.11 | 19.22 |

**[Table 3]**

| Catalyst | Al/(Mg+Al) | Ba/(Mg+Al) | Ba/Ru |
|---|---|---|---|
| Ex. 1 | 0.0394 | 0.0651 | 2.99 |
| Ex. 2 | 0.0168 | 0.0681 | 2.88 |
| Ex. 3 | 0.0697 | 0.0609 | 2.54 |
| Ex. 4 | 0.0408 | 0.0364 | 1.70 |
| Ex. 5 | 0.0364 | 0.0881 | 3.74 |
| Ex. 6 | 0.0379 | 0.0624 | 2.72 |
| Ex. 7 | 0.0137 | 0.0644 | 2.87 |
| Ex. 8 | 0.0387 | 0.0662 | 3.27 |
| Comp. Ex. 1 | 0 | 0.0595 | 11.9 |
| Comp. Ex. 2 | 0 | 0.0420 | 4.43 |
| Comp. Ex. 3 | 0 | 0.0777 | 20.9 |
| Comp. Ex. 4 | 1.000 | 0.0919 | 2.96 |

### Test Example 2: Analysis of ruthenium (Ru) volatility during heat treatment (TPD-MS)

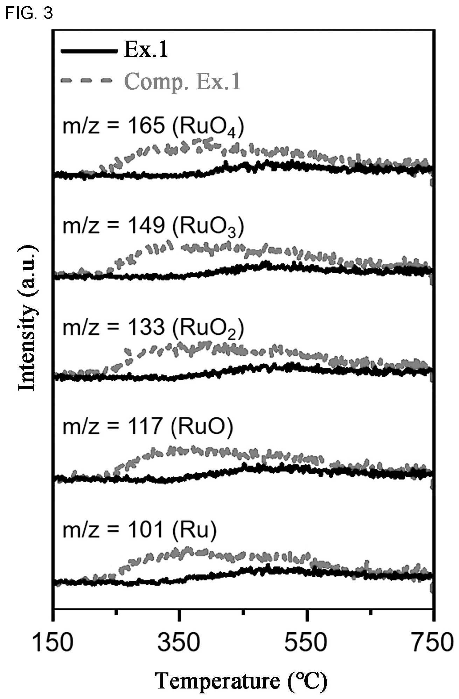

While the catalyst composite before the final heat treatment step in preparing a catalyst according to each of Example 1 and Comparative Example 1 was heat treated at a temperature ranging from 150°C to 750°C at a heating rate of 20°C/min, the mass spectrum (MS) was analyzed. The results are shown in FIG. 3.

It can be seen from the results of FIG. 3 that the ruthenium catalyst composite containing no aluminum (Al) according to Comparative Example 1 shows mass spectrum (MS) signals increasing at m/z of 101, 117, 133, 149 and 165 from approximately 250°C. The signals represent ionized Ru, RuO, RuO₂, RuO₃ and RuO₄, respectively, and the presence of RuO*ₓ* (*x* = 1 to 4) suggests that ruthenium (Ru) may be lost by being volatilized in an oxidized form from the catalyst. On the contrary, the ruthenium catalyst composite according to Example 1 shows no mass spectrum (MS) signal at the corresponding m/z values, which suggests that ruthenium (Ru) is not volatilized but is fixed stably on the catalyst surface.

### Test Example 3: ²⁷Al MAS-NMR

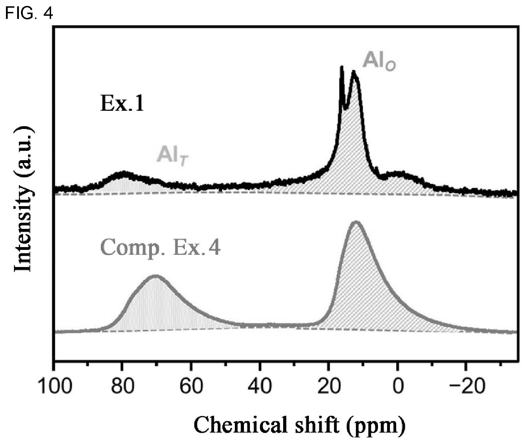

The ruthenium catalyst composite according to each of Example 1 and Comparative Example 4 was analyzed by ²⁷Al magic angle spinning-nuclear magnetic resonance (MAS-NMR). The results are shown in FIG. 4.

Referring to FIG. 4, a chemical shift value appearing at 80 ppm to 60 ppm represents tetrahedral Al (Al*_{T}*) and a chemical shift value appearing at -10 ppm to 20 ppm represents hexahedral Al (Al*_{O}*). Distribution of aluminum (Al) species in the catalyst was determined through the comparison of peak areas. That is, the ruthenium catalyst composite according to Comparative Example 4 shows a value of Al*_{O}*/Al*_{T}* of 1.7, and thus exhibits aluminum distribution similar to Al distribution of typical gamma-alumina. On the contrary, the ruthenium catalyst composite according to Example 1 shows a value of Al*_{O}*/Al*_{T}* of 7.2, and thus exhibits a significantly more predominate hexahedral aluminum (Al) distribution.

This is unique characteristics of the catalyst according to Example 1 and suggests that aluminum (Al) is dispersed in MgO and BaO having a cubic structure. Although a general mixture of magnesium (Mg) with aluminum (Al) forms MgAl₂O₄ spinel structure (Journal of Materials Chemistry, 2011, 21, 8332-8337), it can be seen that the ruthenium catalyst composite according to Example 1 shows an NMR pattern significantly different from MgAl₂O₄ spinel structure. The peak splitting of the portion of Al*_{O}* appearing in the ruthenium catalyst composite according to Example 1 shows an Al-O structure coordinated with various elements (Al, Mg, Ba), which suggests a solid solution structure formed by substituting Mg²⁺ and Ba²⁺ sites of MgO and BaO with Al³⁺.

### Test Example 4: X-ray diffractometry (XRD)

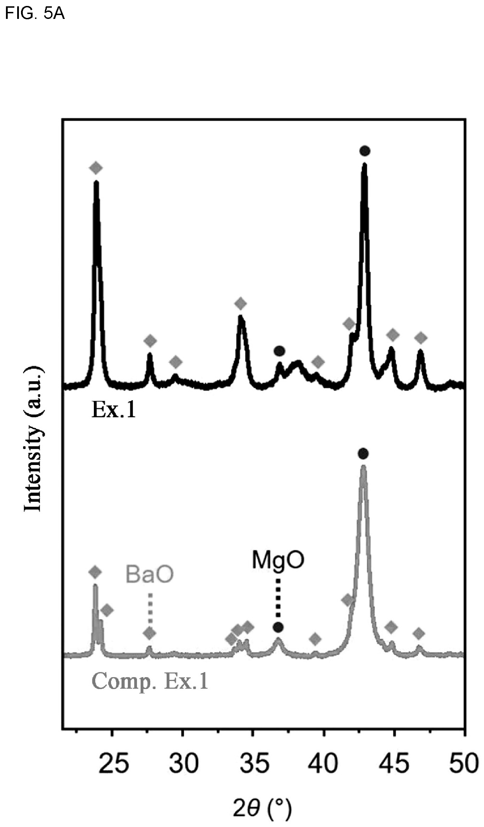

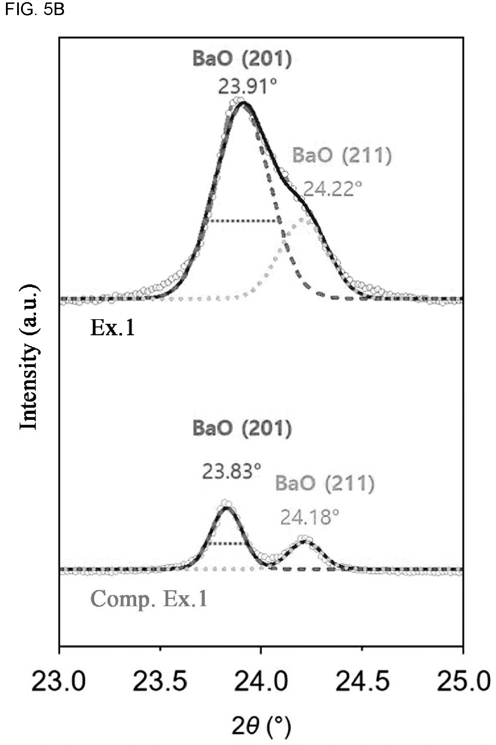

Powder of the ruthenium catalyst composite prepared according to each of Example 1 and Comparative Example 1 was determined in terms of X-ray diffractometry (XRD) pattern. The results are shown in FIG. 5.

Referring to FIG. 5A, both of the ruthenium catalyst composites according to Example 1 and Comparative Example 1 show no characteristic peaks of ruthenium (Ru) and aluminum (Al) and exhibit characteristic peaks of BaO and MgO. Such results suggest that aluminum (Al) is very uniformly distributed in the catalyst to a level of less than XRD detection limit.

In addition, FIG. 5B shows an exaggerated aera corresponding to 2θ = 23° to 25°, wherein characteristic peaks of BaO (201) and BaO (211) crystal surfaces appear. The peaks of BaO (201) and BaO (211) according to Example 1 are observed at a higher 2θ value as compared to Comparative Example 1, which suggests that Al³⁺ having a smaller size as compared to Ba²⁺ infiltrates to BaO crystal surfaces and the diffraction angle is shifted to a higher side. That is, a solid structure in which aluminum (Al) is dispersed in an atomic state is confirmed again.

Meanwhile, BaO (201) peak was analyzed according to the Scherrer equation to analyze the crystal size of BaO. As a result, it is shown that BaO in the ruthenium catalyst composite according to Example 1 has a crystal size of 26 nm, and BaO in the ruthenium catalyst composite according to Comparative Example 1 has a crystal size of 44 nm. In other words, it can be seen that BaO in the ruthenium catalyst composite according to Example 1 is dispersed uniformly as relatively smaller crystals.

### Test Example 5: Electron microscopy

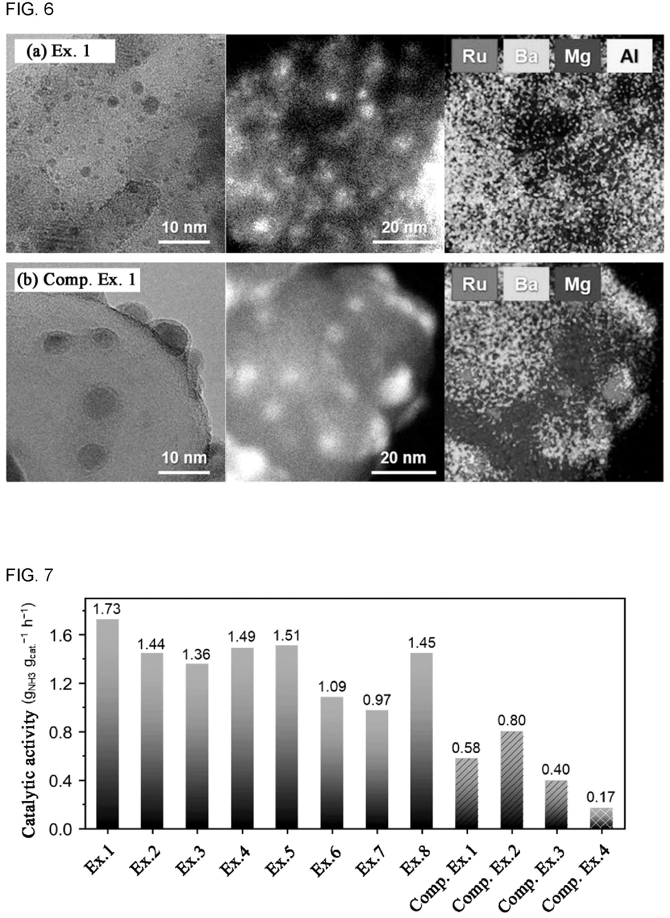

The ruthenium catalyst composite prepared according to each of Example 1 and Comparative Example 1 was analyzed through transmission electron microscopy (TEM), high angle annular dark-field scanning transmission electron microscopy (HAADF-STEM) and energy dispersive spectroscopy (EDS) elemental mapping. The results are shown in FIG. 6. Herein, FIG. 6A shows an image of the ruthenium catalyst composite according to Example 1, and FIG. 6B shows an image of the ruthenium catalyst composite according to Comparative Example 1.

It can be seen from the results of FIG. 6 that ruthenium (Ru) having an average particle diameter of approximately 1.8 nm is dispersed uniformly in the ruthenium catalyst composite according to Example 1, and ruthenium (Ru), barium (Ba) and aluminum (Al) are distributed while being in spatially close contact with one another. On the contrary, it is shown that ruthenium (Ru) having an average particle diameter of approximately 7 nm is dispersed uniformly in the ruthenium catalyst composite according to Comparative Example 1, and one part of ruthenium (Ru) is in spatially close contact with barium (Ba) but the other part thereof is deposited on a thick BaO layer or is not in contact with barium (Ba).

In other words, according to the present disclosure, it is possible to reduce the average size of ruthenium (Ru), which is an activity center, and to induce a structure in which ruthenium (Ru) is distributed spatially closely with BaO, a co-catalyst, by adding a trace amount of aluminum (Al) to the catalyst. Such a structure can induce an effect of maximizing "Ru-BaO interface" generally known as an activity spot.

### Test Example 6: Evaluation of ammonia synthesis reactivity

The ruthenium catalyst composite prepared according to each of Examples 1 to 8 and Comparative Examples 1 to 4 was evaluated in terms of ammonia synthesis reactivity.

Ammonia synthesis was carried out under the conditions of 400°C, 50 bar, N₂/H₂ = 1/3 and WHSV 18000 cm³g_{cat}.⁻¹h⁻¹. The concentration of ammonia in the product flow was detected by gas chromatography, and the catalytic activity was calculated through the space velocity and detected ammonia concentration.

The ammonia synthesis activity of the ruthenium catalyst composite prepared according to each of Examples 1 to 8 and Comparative Examples 1 to 4 is shown in FIG. 7.

Referring to FIG. 7, the ruthenium catalyst composite according to each of Examples 1 to 8 shows an activity of 0.97 g_{NH3}g_{cat.}⁻¹h⁻¹ or more, which is significantly higher ammonia synthesis activity as compared to the ruthenium catalyst composites having an activity of 0.80 g_{NH3}g_{cat.}⁻¹h⁻¹ or less according to Comparative Examples 1 to 4. Particularly, in the case of Example 1, it shows a high activity of 1.73 g_{NH3}g_{cat.}⁻¹h⁻¹ or more, which is at least two times higher than the activity of the ruthenium catalyst composite according to Comparative Example 2 in which the highest activity appears among Comparative Examples. It is shown that Examples 1 to 5 prepared by using the same method and precursors show a similar catalytic activity of 1.36 to1.73 g_{NH3}g_{cat.}⁻¹h⁻¹. In addition, it is shown that Examples 6 to 8 in which a method and ruthenium (Ru) precursor different from those in Examples 1 to 5 are used also show a higher activity as compared to Comparative Examples.

Meanwhile, it can be seen from the comparison of the ruthenium catalyst composites using the same MgO as a carrier among Comparative Examples that catalytic activity has a correlation with ruthenium (Ru) content (Comparative Example 2 > Comparative Example 1 > Comparative Example 3). Therefore, it can be seen that ruthenium (Ru) content plays an important role in catalytic activity. In addition, among Comparative Examples, Comparative Example 4 using pure Al₂O₃, not a mixed magnesium (Mg)/aluminum (Al) oxide, as a carrier has a high ruthenium (Ru) content but still shows a significantly low catalytic activity. That is, it can be seen that mixing of Mg with Al at an adequate ratio is very important in enhancing catalytic activity.

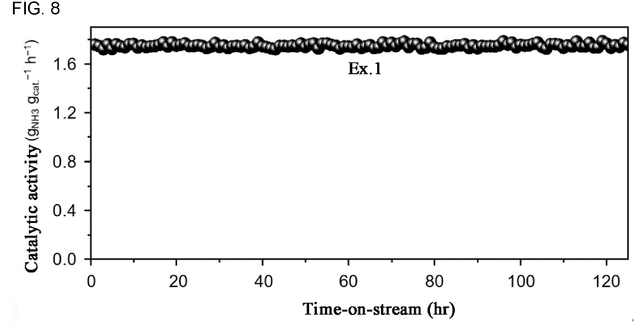

FIG. 8 shows the results of long-term operation of ammonia synthesis for about 120 hours using the ruthenium catalyst support of Example 1 showing the highest catalyst activity. It can be seen from the results of FIG. 8 that the ruthenium catalyst support according to Example 1 maintains its activity for 120 hours and shows high durability in ammonia synthesis.

The present disclosure has been described in detail with reference to specific examples. However, it should be understood by those skilled in the art that the various changes and modifications can be without departing from the scope of the present disclosure defined by the following claims through the addition, modification, elimination or supplement of a constitutional element, and that such changes and modifications also fall within the scope of the present disclosure.

## Claims

1. A method for preparing a ruthenium catalyst composite for ammonia synthesis, comprising the steps of:
(c) carrying out drying and primary heat treatment of a magnesium/aluminum precursor to prepare a calcined magnesium/aluminum material;
(d) impregnating the calcined magnesium/aluminum material with an aqueous barium precursor solution, and carrying out drying and secondary heat treatment to prepare a calcined magnesium/aluminum/barium material; and
(e) impregnating the calcined magnesium/aluminum/barium material with a ruthenium precursor solution, and carrying out drying and tertiary heat treatment to prepare a ruthenium catalyst composite.

2. The method for preparing a ruthenium catalyst composite for ammonia synthesis according to claim 1, wherein, before step (c), the following steps (a) and (b) are carried out:
(a) mixing a magnesium precursor and aluminum precursor with distilled water to prepare a mixed aqueous solution; and
(b) performing co-precipitation while adding an aqueous solution for precipitation to the mixed aqueous solution to obtain a magnesium/aluminum precursor as a precipitate.

3. The method for preparing a ruthenium catalyst composite for ammonia synthesis according to claim 1, wherein, before step (c), the following steps (a') and (b') are carried out:
(a') mixing an aluminum precursor with distilled water to prepare an aqueous aluminum precursor solution; and
(b') impregnating magnesium oxide (MgO) with the aqueous aluminum precursor solution to obtain a magnesium/aluminum precursor.

4. The method for preparing a ruthenium catalyst composite for ammonia synthesis according to claim 2, wherein, in step (a), the magnesium precursor is any one selected from magnesium nitrate (Mg(NO₃)₂), magnesium bicarbonate (Mg(HCO₃)₂), magnesium chlorate (Mg(ClO₃)₂), magnesium chloride (MgCl₂), magnesium bromide (MgBr₂), magnesium iodide (MgI₂) and magnesium sulfate (MgSO₄), or hydrate thereof.

5. The method for preparing a ruthenium catalyst composite for ammonia synthesis according to claim 1 or 2, wherein, in steps (a) and (a'), the aluminum precursor is any one selected from aluminum nitrate (Al(NO₃)₃), aluminum bicarbonate (Al(HCO₃)₃), aluminum chlorate (Al(ClO₃)₃), aluminum chloride (AlCl₃), aluminum bromide (AlBr₃), aluminum iodide (AlI₃) and aluminum sulfate (Al₂(SO₄)₃), or hydrate thereof.

6. The method for preparing a ruthenium catalyst composite for ammonia synthesis according to claim 2, wherein, in step (a), the mixed aqueous solution of magnesium and aluminum has a molar ratio of Al/(Mg+Al) of 0.01 to 0.10.

7. The method for preparing a ruthenium catalyst composite for ammonia synthesis according to claim 1, wherein, in step (d), the barium precursor is any one selected from barium nitrate (Ba(NO₃)₂), barium bicarbonate (Ba(HCO₃)₂), barium chlorate (Ba(ClO₃)₂), barium chloride (BaCl₂), barium bromide (BaBr₂), barium iodide (BaI₂) and barium sulfate (BaSO₄), or hydrate thereof.

8. The method for preparing a ruthenium catalyst composite for ammonia synthesis according to claim 1, wherein, in steps (c) and (d), each of the primary heat treatment and the secondary heat treatment is carried out at 400°C to 800°C.

9. The method for preparing a ruthenium catalyst composite for ammonia synthesis according to claim 1, wherein, in step (e), the ruthenium precursor is any one selected from triruthenium dodecacarbonyl (Ru₃(CO)₁₂), ruthenium chloride (RuCl₃·xH₂O), ruthenium carbonate (C₃O₉Ru₂) and ruthenium nitrate (Ru(NO)(NO₃)₃).

10. The method for preparing a ruthenium catalyst composite for ammonia synthesis according to claim 1, wherein, in step (e), the tertiary heat treatment is carried out at 300°C to 700°C.

11. A ruthenium catalyst composite for ammonia synthesis, obtained by the method as defined in any one of claims 1 to 3.

12. The ruthenium catalyst composite for ammonia synthesis according to claim 11, which has a content of aluminum (Al) of 0.5 wt% to 4.0 wt%.

13. The ruthenium catalyst composite for ammonia synthesis according to claim 11, which has a structure of solid solution in which aluminum (Al) is dispersed in an atomic state.
